# EUROPEAN PATENT APPLICATION

(11) **EP 1 452 987 A1**
(43) Date of publication of application: **01.09.2004**
(21) Application number: 02790883.9
(22) Date of filing: 26.12.2002
(51) Int. Cl.: G06F 17/60

(54) **MEMBER MANAGEMENT SERVER SYSTEM AND MEMBER MANAGEMENT METHOD**

(30) Priority: 27.12.2001 JP 2001396061
(71) Applicant: SEIKO EPSON CORPORATION, Shinjuku-ku, Tokyo 163-0811 (JP)
(72) Inventor: SUZUKI, Junji, c/o EPSON DIRECT CORPORATION, Matsumoto-shi, Nagano 399-8703 (JP); YOSHIZAKI, Hironori, c/o EPSON DIRECT CORPORATION, Matsumoto-shi, Nagano 399-8703 (JP)
(74) Representative: Sturt, Clifford Mark
(86) International application number: PCT/JP2002/013570
(87) International publication number: WO 2003/063034

(57) **Abstract**

A Web server determines whether or not there is a request of new group registration from a user's client computer on a shopping site managed by the Web server (step S200). When there is a request of new group registration, a group member registration form is sent to the client computer of the user (step S205). In the case where all entries input by the user are adequate, the Web server carries out collation with registration in a management server (steps S230 to S240), sets diverse attributes including a group ID in a personal page of each user belonging to a group (step S250), and sends a mail showing that group registration is completed to the client computer of the user via the Internet (step S255).

## Description

### Technical Field

The present invention relates to a member management server system that receives member registration from a client computer of each user via a network, and a corresponding member management method.

### Background Art

A known member management server system accepts individual registration from each user utilizing a client computer via a network and offers some benefit to the individually registered user.

One proposed technique for this system regards users having an identical telephone number, postal address, or another piece of information at the entry for registration as members of one group and gives some benefit to the group. The benefit given to the group is generally advantageous over the benefit given to the individual. The user who is regarded as a member of the group accordingly gains the more privileged treatment, compared with the user who is not regarded as a member of the group.

The prior art technique, however, uniformly specifies a group by the telephone number or another piece of information. The user is thus not allowed to freely determine the group membership and may have some difficulties in gaining privileged treatment. For example, multiple users who actually belong to one group may have different telephone numbers, because of different departments or another reason. Grouping by the telephone number prevents the users from gaining the privileged treatment.

In order to solve the drawbacks of the prior art technique, the object of the present invention is to provide a member management server system to allow for determination of the group membership with a relatively high degree of freedom and a corresponding member management method.

### Disclosure of the Invention

In order to achieve the above object, a first aspect of the present invention provides a member management server system that receives member registration from a user's client computer via a network, the member management server system including a group registration execution module that, in response to a request of registering multiple users as one group via the network, accepts registration of the multiple users as the one group.

The member management server system of the present invention receives a user's request or declaration of registering multiple users as one group and accepts registration of the multiple users as the one group in response to the request. This member management server system thus allows a relatively high degree of freedom for determination of the group membership according to the declaration of the user.

In the first member management server system of this invention, the group registration execution module may register one of the multiple users belonging to the one group as an administrator and give only the administrator of the group authority of adding a new user to the group and deleting an existing user from the group.

In the first member management server system of this invention, the group registration execution module may restrict a number of users registered as one group.

The first member management server system of this invention may further include a group evaluation module that evaluates an action of each user belonging to one group registered by said group registration execution module as an action of the group, and a benefit notification module that notifies each user belonging to the group of a benefit, which is given according to an evaluation result by said group evaluation module. The member management server system of the present invention receives a user's request of registering multiple users as one group and accepts registration of the multiple users as the one group in response to the request. The system evaluates an action of each user belonging to the group as an action of the group and notifies each user belonging to the group of a benefit according to an evaluation result. In general, the user who is evaluated as a member of a group consisting of multiple users has a better evaluation result than the user who is evaluated as an individual. The user who belongs to the group can thus gain an advantageous benefit, compared with the user who does not belong to the group. A relatively high degree of freedom is allowed for determination of the group membership according to the declaration of the user. The user thus readily gains the advantageous benefit and privileged treatment. Here the 'benefit' is not specifically restricted as long as it is beneficial to the user. Examples of the benefit include a merchandise discount rate or some present (providing a pay service with free of charge or providing an optional service with free of charge).

In the first member management server system of the present invention with the group evaluation module, the group evaluation module may evaluate a merchandise purchase record of each user belonging to one group registered by the group registration execution module as a part of a merchandise purchase record of the group.

In the first member management server system of the present invention with the group evaluation module, the group evaluation module may evaluate a merchandise purchase record of a commodity after elapse of a return approval term, among commodities purchased by each user belonging to the one group registered by the group registration execution module, as part of a merchandise purchase record of the group.

In the first member management server system of the present invention with the benefit notification module, the benefit notification module may update the benefit every time the evaluation result by the group evaluation module exceeds a preset stage.

In the first member management server system of the present invention with the benefit notification module, the benefit may be a merchandise discount rate.

In the first member management server system of the present invention with the group evaluation module and the benefit notification module, the member management server system may further include an individual registration execution module that executes individual registration of each user via the network, and a personal page creation module that creates a personal page of the user who has individual registration by the individual registration execution module. The benefit notification module may cause the benefit according to the evaluation result by said group evaluation module to be included in a personal page of a user who has been registered as a member of one group and also has individual registration.

In the first member management server system of the present invention with the group evaluation module and the benefit notification module, the member management server system may further include a group identification module that, when receiving an order from each user via the network, identifies a group, to which the user belongs, and a benefit allocation module that reads a benefit according to the group identified by the group identification module and allocates the benefit to the user.

In the first member management server system of the present invention, the network may be the Internet. The network may alternatively be a communication line other than the Internet, for example, a company LAN.

A second aspect of the present invention provides a member management method that receives member registration from a user's client computer via a network, the member management method including, in response to a request of registering multiple users as one group via the network, accepting registration of the multiple users as the one group. The member management method of the present invention allows a relatively high degree of freedom for determination of the group membership according to the declaration of the user. The member management method may have various arrangements to attain the respective operations of the first member management server system of the present invention discussed above.

### Brief Description of the Drawings

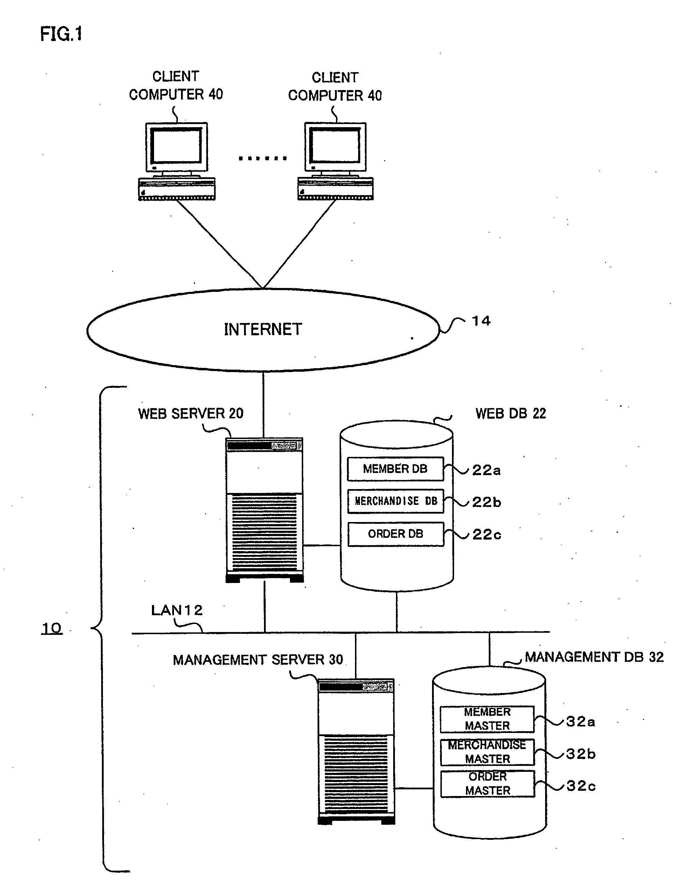

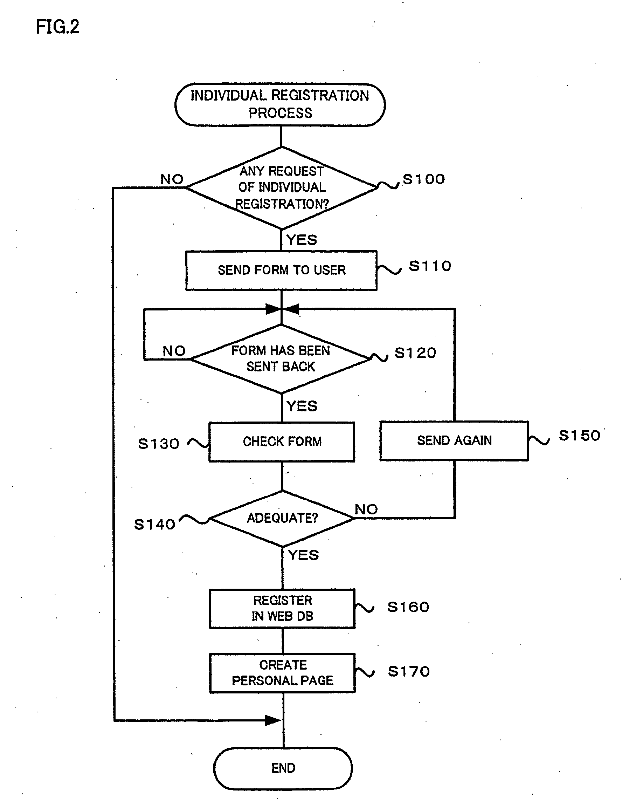

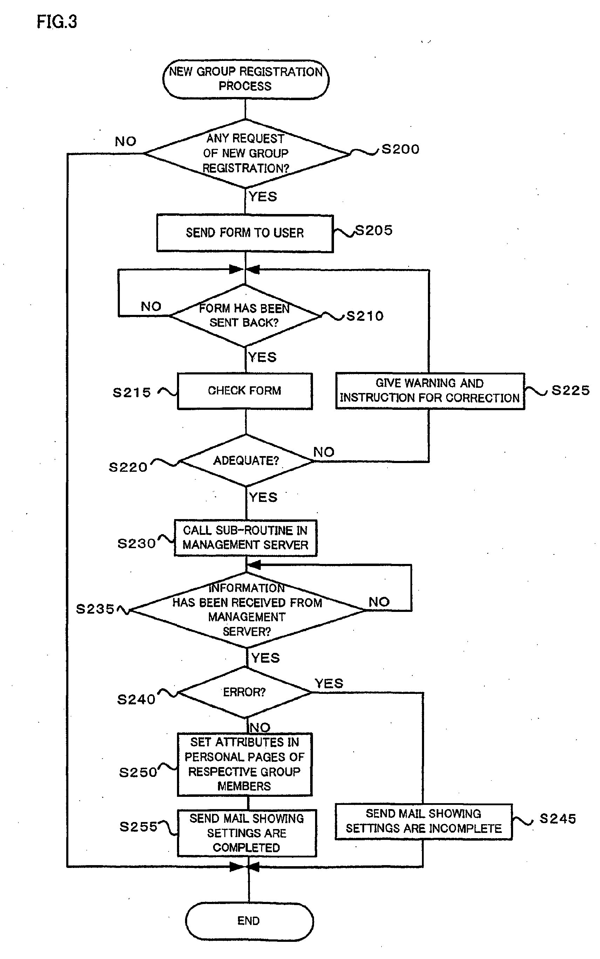

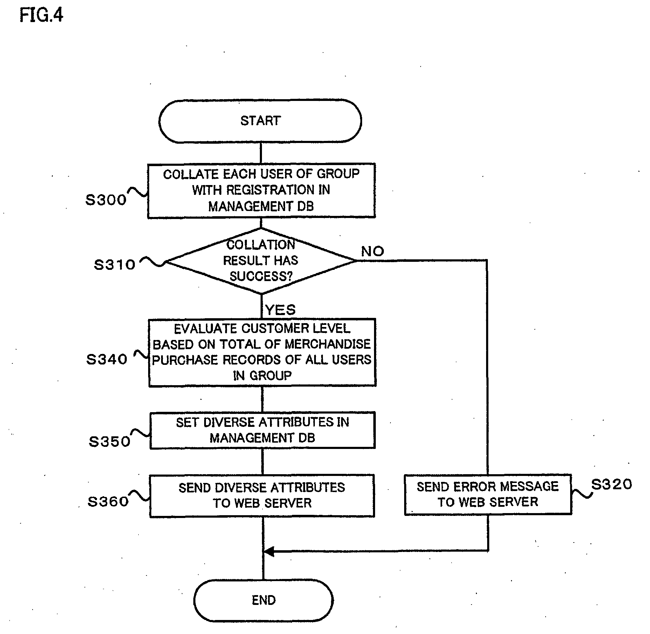

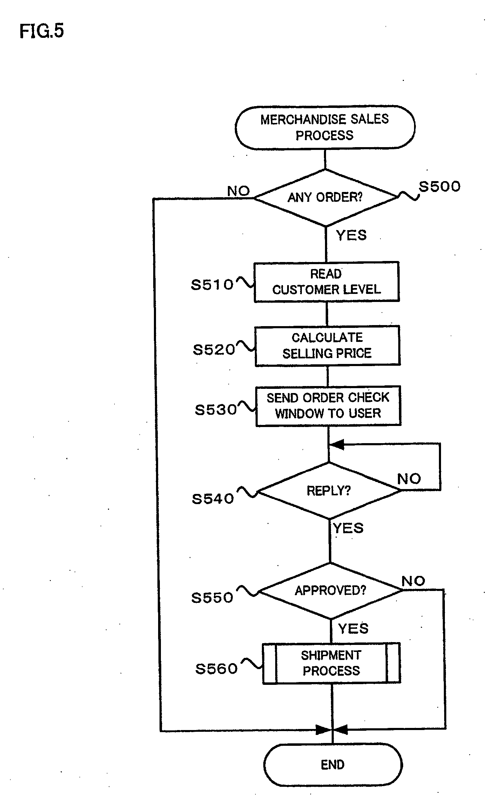

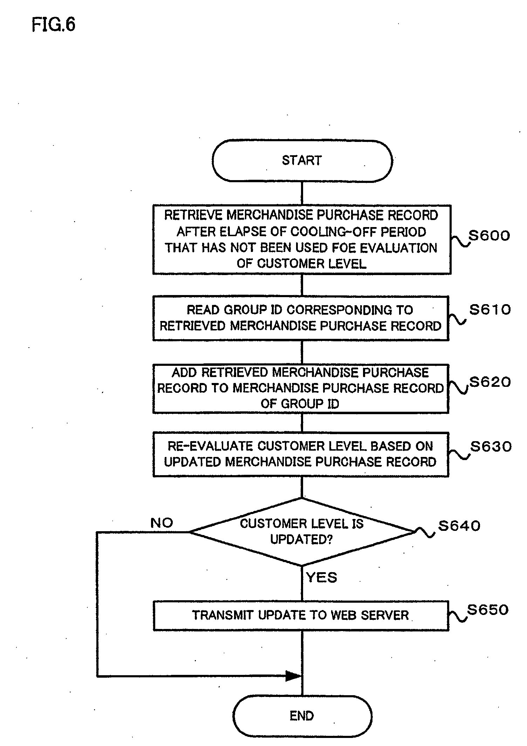

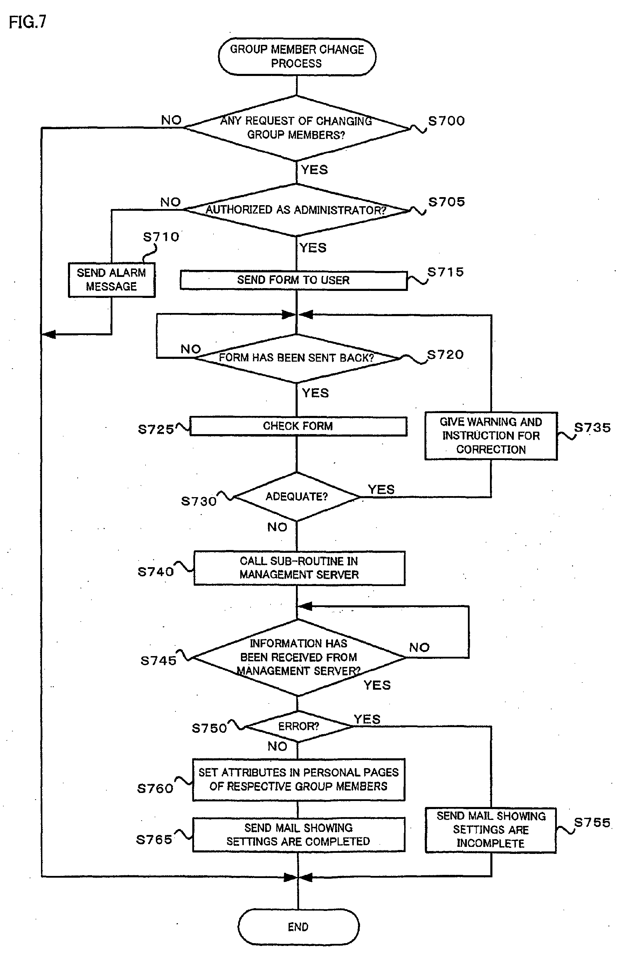

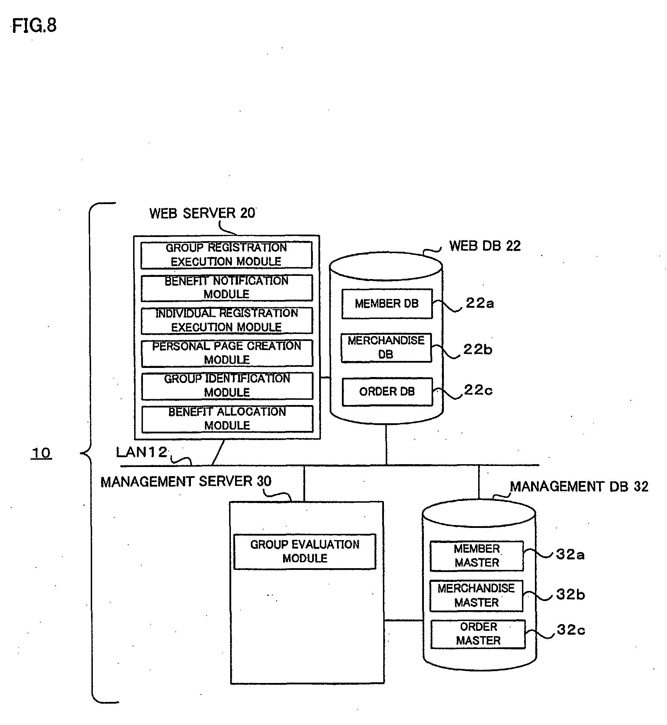

Fig. 1 schematically illustrates the structure of a member management server system in one embodiment; Fig. 2 is a flowchart showing an individual registration routine executed by a Web server; Fig. 3 is a flowchart showing a new group registration routine executed by the Web server; Fig. 4 is a flowchart showing a sub-routine for group registration executed by a management server; Fig. 5 is a flowchart showing a merchandise sales routine executed by the Web server; Fig. 6 is a flowchart showing a customer level re-evaluation routine executed by the management server; Fig. 7 is a flowchart showing a group member change routine executed by the Web server; and Fig. 8 is a functional block diagram.

### Best Modes of Carrying Out the Invention

One mode of carrying out the invention is discussed below with reference to the accompanied drawings. Fig. 1 schematically illustrates the construction of a member management server system 10 in one embodiment.

The member management server system 10 includes a Web server 20, a Web DB 22 (here and hereafter DB represents database) connecting with the Web server 20, a management server 30, and a management DB 32 connecting with the management server 30. The respective servers 20 and 30 and the DBs 22 and 32 are mutually connected by a LAN 12 in a communicable manner.

The Web server 20 manages a shopping site that sells a diversity of commodities. This Web server 20 takes charge of member registration and sales of the commodities in response to requests from client computers 40 connected via the Internet 14. The Web server 20 also writes and reads various pieces of information into and from the Web DB 22. The Web DB 22 is connected with the Web server 20 and includes a member DB 22a, a merchandise DB 22b, and an order DB 22c. The member DB 22a is a database having a record of information regarding each of the members of online shopping, for example, an ID allocated to each member as a member identification number, a password set by the member for log-in to the shopping site, as well as the name, the postal address, and the mail address of the member. The merchandise DB 22b is a database having a record of information regarding each of commodities handled on the shopping site, for example, the article code, the article category, the trade name, the description, the price, and the stock of each commodity. The order DB 22c is a database having a record of information regarding orders received in the online shopping.

The management server 30 carries out tabulation and management of various data. The management DB 32 is connected with the management server 30 and includes a member master 32a, a merchandise master 32b, and an order master 32c. The member master 32a has a record of essential data of the member DB 22a in the Web DB 22. The merchandise master 32b has a record of essential data of the merchandise DB 22b in the Web DB 22. The order master 32c has a record of essential data of the order DB 22c in the Web DB 22. The management server 30 carries out operations to make the contents of the management DB 32 reflect on the Web DB 22 or inversely make the contents of the Web DB 22 reflect on the management DB 32 at regular intervals or at adequate timings. Reflection of the contents of the member DB 22a and the order DB 22c in the Web DB 22 upon the member master 32a and the order master 32c in the management DB 32 causes, for example, information of newly registered members and modified information of registered members to be stored in the member master 32a. Reflection of the contents of the merchandise master 32b in the management DB 32 upon the merchandise DB 22b in the Web DB 22 causes latest merchandise information to be stored in the Web DB 22. In the case of receiving an order of merchandise by telephone, the operator manually registers the details of the order into the management DB 32. Only the customers who have purchased the merchandise are registered in the member DB 22a of the management DB 32.

The operations of the member management server system are discussed below with reference to flowcharts of and subsequent to Fig. 2. An individual registration process is described first. The Web server 20 reads and executes an individual registration program at preset timings. Fig. 2 is a flowchart showing an individual registration routine. When this routine starts, the Web server 20 determines whether or not there is a request of member registration from any of client computers of the users on a shopping site managed by the Web server 20 (step S100). When there is no request of member registration, the routine is immediately terminated. When there is a request of member registration, on the other hand, the routine sends an individual member registration form to the client computer 40 of a user, who has given the request (step S110). The individual member registration form has input boxes to enter the postal address, the name, the mail address, and the telephone number of the user, a user ID, a user password, and other required items. It is then determined whether or not the individual member registration form has been sent back (step S120). The routine waits for the reply. When receiving the reply, the routine checks the entries of the replied individual member registration form (step S130) and determines whether or not all the entries are adequate (step S140). In the case of any inadequacy, for example, when any input box has a vacancy or another problem, the individual member registration form is again sent, together with a message of pointing out the problem, to the client computer 40 of the user (step S150). The routine then returns to step S120. When all the entries are adequate, the routine newly registers the user as a new individual member into the member DB 22a of the Web DB 22 (step S160) and creates a personal page of the individual member on the member DB 22a (step S170). The routine is then terminated. The personal page includes a record of commodities purchased by the individual member on the shopping site managed by the Web server 20 (merchandise purchase record) and a customer level (discussed later) if the individual member belongs to a group.

The following describes a new group registration process. The Web server 20 reads and executes a new group registration program at preset timings. Fig. 3 is a flowchart showing a new group registration routine. When this routine starts, the Web server 20 first determines whether or not there is a request of new group registration from any of the client computers 40 of the users on the shopping site managed by the Web server 20 (step S200). When there is no request of new group registration, the routine is terminated immediately. When there is a request of new group registration, on the other hand, the routine sends a group member registration form to the client computer 40 of the user (step S205). The group member registration form includes input boxes to enter the location (postal address) , the name, and the telephone number of the group, a group ID, and a group password, an input box to enter the number of users belong to the group, an input box to enter the user ID of each user, and an input box to enter the name of the user who is authorized as the administrator in the group. It is then determined whether or not the group member registration form has been sent back (step S210). The routine waits for the reply. When receiving the reply, the routine checks the entries of the replied group member registration form (step S215) and determines whether or not all the entries are adequate (step S220). In the case of inadequacy of any entry, the group member registration form is sent again, together with a warning message of pointing out the inadequacy and giving an instruction for correction, to the client computer 40 of the user (step S225). The routine then returns to step S210. When all the entries are adequate, the routine sends the entries to the management server 30 via the LAN 12 and calls a sub-routine for group registration in the management server 30 (step S230).

When the sub-routine for group registration shown in Fig. 4 starts, the management server 30 first carries out collation of the user ID allocated to each user belonging to the group with registration in the member master 32a of the management DB 32 (step S300), and determines whether a result of the collation has success or failure (step S310). When the result of the collation has failure, for example, when any user ID does not have registration, an error message is sent to the Web server 20 (step S320). The sub-routine is then terminated. The user, who has the user ID and the personal page but has not yet purchased any merchandise, has not been registered in the member master 32a. The user ID of such a user has a failure in collation, so that the user is not allowed to be registered as a member of the group. When the collation has success, on the other hand, the sub-routine reads the merchandise purchase records of all the users belonging to the group (excluding trades in cooling-off periods or other return approval terms) from the order master 32c, sums up the merchandise purchase records, specifies the total as a merchandise purchase record of the group, and evaluates the customer level based on the merchandise purchase record of the group (step S340). The customer level represents a merchandise discount rate given as a benefit at the time of purchasing merchandise. A concrete application of this embodiment stores a table representing the mapping of the merchandise purchase record to the customer level, and updates the customer level every time the merchandise purchase record exceeds a preset stage. There is a predetermined maximum level as the upper limit of the customer level. The merchandise purchase record may be the total price of the commodities purchased or may be the total number of the commodities purchased. The sub-routine then writes diverse attributes, such as the group ID, the customer level, and an administrator flag, mapped to the registration in the member master 32a of the management DB 32 with regard to the user ID allocated to each user belonging to the group (step S350). Here the administrator flag is set ON for the user who is authorized as the administrator and is set OFF for the other users. After the attributes are sent to the Web server 20 via the LAN 12 (step S360), this sub-routine is terminated.

Referring back to the routine of Fig. 3, it is determined whether or not the Web server 20 has received any information from the management server 30 (step S235). The routine waits until receiving any information. When receiving any information, the routine identifies the received information with the error message (step S240). When the received information is the error message, a mail showing that group registration is incomplete is sent to the client computer 40 of the user via the Internet 14 (step S245). This routine is then terminated. When the received information is not the error message but the diverse attributes regarding the group, on the other hand, the routine sets the diverse attributes into the personal pages of the respective users belonging to the group (step S250). After sending a mail showing that group registration is completed to the client computer 40 of the user via the Internet 14 (step S255), this routine is terminated. After such group registration, when each user belonging to the registered group opens the own personal page, the merchandise discount rate is included in the personal page as the customer level of the group. The merchandise discount rate is determined according to the merchandise purchase record of the group. In general, the merchandise purchase record of the group is better than the merchandise purchase record of the individual. The user who belongs to the group accordingly gains a higher merchandise discount rate than the user who does not belong to the group.

A merchandise sales process is discussed below. The Web server 20 reads and executes a merchandise sales program at preset timings. Fig. 5 is a flowchart showing a merchandise sales routine. When this routine starts, the Web server 20 determines whether or not the shopping site managed by the Web server 20 has just received an order of any commodity from a user via the Internet 14 (step S500). When there is no order of any commodity, the routine is terminated immediately. When there is an order of any commodity, on the other hand, the routine reads the customer level or the merchandise discount rate mapped to the user ID of the user, who has ordered this time, from the member DB 22a of the Web DB 22 (step S510), multiplies a commodity price by the merchandise discount rate to determine an actual selling price (step S520), and sends a check window including the actual selling price to the client computer 40 of the user via the Internet 14 (step S530). It is then determined whether or not a reply to the check window has been received from the client computer 40 of the user (step S540). The routine waits for the reply. When receiving the reply, the routine determines whether or not the selling price has been approved by the user (step S550). In the case where the user has not approved the selling price, the routine determines that the trade ends up in failure and is terminated. In the case where the user has approved the selling price, on the contrary, the routine determines that the trade goes through and carries out a shipment process of the ordered merchandise (step S560), prior to termination. In general, the user who belongs to the group gains the higher merchandise discount rate than the user who does not belong to the group. The user who belongs to the group can thus purchase identical commodities under advantageous conditions, compared with the user who does not belong to the group.

A customer level re-evaluation process is discussed below. This process re-evaluates the customer level based on an updated merchandise purchase record. The management server 30 reads and executes a customer level re-evaluation program at preset timings. Fig. 6 is a flowchart showing a customer level re-evaluation routine. When this routine starts, the management server 30 first retrieves any merchandise purchase record after elapse of a cooling-off period, which has not been used for evaluation of the customer level, in the management DB 32 (step S600). The routine subsequently reads the group ID corresponding to the merchandise purchase record obtained as a result of the retrieval (step S610), adds the retrieved merchandise purchase record to the merchandise purchase record of the group ID (step S620), and re-evaluates the customer level of the group ID, based on the updated merchandise purchase record of the group ID (step S630). It is then determined whether or not the customer level is updated (step S640). The customer level is kept unchanged until the merchandise purchase record exceeds a preset stage, and is updated when the merchandise purchase record exceeds the preset stage. In the case of no update of the customer level, the routine is terminated without any further processing. In the case of update of the customer level, on the other hand, the update is transmitted to the Web server 20 via the LAN 14 (step S650). The Web server 20 receives the transmitted update and updates the customer level in the personal page of each user belonging to the group.

The following describes a group member change process. The Web server 20 reads and executes a group member change program at preset timings. Fig. 7 is a flowchart showing a group member change routine. When this routine starts, the Web server 20 first determines whether or not there is any request of changing group members from the client computer 40 of the user on the shopping site managed by the Web server 20 (step S700). When there is no request of changing the group members, the routine is terminated immediately. When there is any request of changing the group members, on the other hand, the routine determines whether or not the sender who has sent the request this time is authorized as the administrator (step S705). When the sender is not authorized as the administrator, a message showing that a change of the group members is not acceptable due to the lack of authorization is sent to the client computer 40 of the user (step S710). The routine is then terminated. When the sender is authorized as the administrator, on the contrary, a group member change form is sent to the client computer 40 of the user (step S715). The group member change form includes a display box showing the current number of users belonging to the group and the user IDs of the respective users. When addition of a new member to the group is required, a new user ID is to be input into a blank of the display box. When deletion of an existing member from the group is required, the user ID allocated to the existing member is to be deleted from the display box. The routine determines whether or not the group member change form with such modified entry has been sent back (step S720). The routine waits for the reply. When receiving the reply, the routine checks the modified entry of the group member change form (step S725) and determines whether or not the modified entry is adequate (step S730). In the case of inadequacy of the modified entry, the group member change form is sent again, together with a warning message of pointing out the inadequacy and giving an instruction for correction, to the client computer 40 of the user (step S735). The routine then returns to step S720. When the modified entry is adequate, the routine sends the modified entry to the management server 30 via the LAN 12 and calls the sub-routine for group registration in the management server 30 (step S740). The sub-routine for group registration has been described previously with reference to Fig. 4. In the case of addition of a new member to the group, when the user ID allocated to the newly added user as the new member is present in the registration of the management DB 32, the customer level is evaluated according to the total of the merchandise purchase records of all the users in the group including the newly added user. In the case of deletion of an existing member from the group, on the other hand, the customer level is evaluated according to the total of the merchandise purchase records of all the users in the group excluding the deleted member.

It is then determined whether or not the Web server 20 has received any information from the management server 30 (step S745). The routine waits until receiving any information. When receiving any information, the routine identifies the received information with the error message (step S750). When the received information is the error message, a mail showing that group member change is incomplete is sent to the client computer 40 of the user via the Internet 14 (step S755). This routine is then terminated. When the received information is not the error message but the diverse attributes regarding the group, on the other hand, the routine sets the diverse attributes into the personal pages of the respective users belonging to the group (step S760). After sending a mail showing that group member change is completed to the client computer 40 of the user via the Internet 14 (step S765), this routine is terminated. Only the user who is authorized as the administrator of the group can execute change of the group members.

In the member management server system 10, as shown by the functional block diagram of Fig. 8, the Web server 20 functions as the group registration execution module, the benefit notification module, the individual registration execution module, the personal page creation module, the group identification module, and the benefit allocation module of the present invention. The management server 30 functions as the group evaluation module of the present invention.

The technique of the embodiment discussed above receives a user's request of registering multiple users as one group and accepts registration of the multiple users as the one group in response to the request. The technique evaluates a merchandise purchase record of each user belonging to the group as part of a merchandise purchase record of the group, and notifies a personal page created for each user of a merchandise discount rate evaluated according to the merchandise purchase record of the group as a customer level. In general, the user who is evaluated as a member of a group consisting of multiple users has the better merchandise purchase record and gains the higher customer level than the user who is evaluated as an individual. The user who belongs to the group can thus purchase identical commodities under advantageous conditions, compared with the user who does not belong to the group. A relatively high degree of freedom is allowed for determination of the group membership according to the declaration of the user. The user readily gains the higher customer level and the privileged treatment.

The merchandise purchase record includes data regarding only commodities after elapse of cooling-off periods. This arrangement ensures fair evaluation of the merchandise purchase record.

Addition of a new user to a group and deletion of an existing member from the group is allowed to only the user who is authorized as the administrator. This arrangement prevents unlimited addition and deletion of the group membership.

Each user belonging to a group is informed of the merchandise discount rate on the own personal page.

Each user belonging to a group can purchase commodities with the merchandise discount rate of the group on the shopping site managed by the member management server system 10.

The embodiment of the present invention discussed above is to be considered in all aspects as illustrative and not restrictive. There may be many modifications, changes, and alterations without departing from the scope or spirit of the main characteristics of the present invention.

For example, the Web server 20 may restrict the number of users registrable as one group in the new group registration process or in the group member change process. This modification prevents the unlimited increase in number of users belonging to one group. Another modification may prohibit the user who belongs to one group from being doubly registered as a member of another group in the new group registration process or in the group member change process. Such modification ensures fair group registration.

In the embodiment discussed above, the member management server system of the present invention includes multiple servers and multiple databases. In one modified structure, the Web server 20 has the functions of the management server 30 and the management DB 32 is omitted. The member management server system of this modified structure accordingly includes only one server and one database.

The arrangement of the above embodiment does not allow the user who has a personal page (the user having individual registration) but has not yet purchased any commodity to be registered as a member of the group. One possible modification may allow such a user to be registered as a member of the group.

### Industrial Applicability

The member management server system and the corresponding member management method of the present invention are effectively used to receive member registration from a client computer of each user via a network.

## Claims

1. A member management server system that receives member registration from a user's client computer via a network, said member management server system comprising:
a group registration execution module that, in response to a request of registering multiple users as one group via the network, accepts registration of the multiple users as the one group.

2. A member management server system in accordance with claim 1, wherein said group registration execution module registers one of the multiple users belonging to the one group as an administrator and gives only the administrator of the group authority of adding a new user to the group and deleting an existing user from the group.

3. A member management server system in accordance with either one of claims 1 and 2, wherein said group registration execution module may restrict a number of users registered as one group.

4. A member management server system in accordance with any one of claims 1 through 3, said member management server system further comprising:
a group evaluation module that evaluates an action of each user belonging to one group registered by said group registration execution module as an action of the group; and
a benefit notification module that notifies each user belonging to the group of a benefit, which is given according to an evaluation result by said group evaluation module.

5. A member management server system in accordance with claim 4, wherein said group evaluation module evaluates a merchandise purchase record of each user belonging to the one group registered by said group registration execution module as part of a merchandise purchase record of the group.

6. A member management server system in accordance with either one of claims 4 and 5, wherein said group evaluation module evaluates a merchandise purchase record of a commodity after elapse of a return approval term, among commodities purchased by each user belonging to the one group registered by said group registration execution module, as part of a merchandise purchase record of the group.

7. A member management server system in accordance with any one of claims 4 through 6, wherein said benefit notification module updates the benefit every time the evaluation result by said group evaluation module exceeds a preset stage.

8. A member management server system in accordance with any one of claims 4 through 7, wherein the benefit is a merchandise discount rate.

9. A member management server system in accordance with any one of claims 4 through 8, said member management server system further comprising:
an individual registration execution module that executes individual registration of each user via the network; and
a personal page creation module that creates a personal page of the user who has individual registration by said individual registration execution module,
wherein said benefit notification module causes the benefit according to the evaluation result by said group evaluation module to be included in a personal page of a user who has been registered as a member of one group and also has individual registration.

10. A member management server system in accordance with any one of claims 4 through 9, said member management server system further comprising:
a group identification module that, when receiving an order from each user via the network, identifies a group, to which the user belongs; and
a benefit allocation module that reads a benefit according to the group identified by said group identification module and allocates the benefit to the user.

11. A member management server system in accordance with any one of claims 1 through 10, wherein the network is the Internet.

12. A member management method that receives member registration from a user's client computer via a network, said member management method comprising the step of:
in response to a request of registering multiple users as one group via the network, accepting registration of the multiple users as the one group.

13. A member management method in accordance with claim 12, said member management method further comprising the step of:
registering one of the multiple users belonging to the one group as an administrator and giving only the administrator of the group authority of adding a new user to the group and deleting an existing user from the group.

14. A member management method in accordance with either one of claims 12 and 13, said member management method further comprising the step of:
restricting a number of users belonging to one group.

15. A member management method in accordance with any one of claims 12 through 14, said member management method further comprising the step of:
in response to a request of registering multiple users as one group via the network, accepting registration of the multiple users as one group, evaluating an action of each user belonging to the one group as an action of the group, and notifying each user belonging to the group of a benefit according to the evaluation result.

16. A member management method in accordance with claim 15, said member management method further comprising the step of:
evaluating a merchandise purchase record of each user belonging to one group as part of a merchandise purchase record of the group.

17. A member management method in accordance with either one of claims 15 and 16, said member management method further comprising the step of:
evaluating a merchandise purchase record of a commodity after elapse of a return approval term, among commodities purchased by each user belonging to the one group, as part of a merchandise purchase record of the group.

18. A member management method in accordance with any one of claims 15 through 17, said member management method further comprising the step of:
updating the benefit every time the evaluation result by said group evaluation module exceeds a preset stage.

19. A member management method in accordance with any one of claims 15 through 18, wherein the benefit is a merchandise discount rate.

20. A member management method in accordance with any one of claims 15 through 19, said member management method further comprising the step of:
creating a personal page of each user who has individual registration via the network, and causing the benefit to be included in the personal page of each user who belongs to the group and has individual registration.

21. A member management method in accordance with any one of claims 15 through 20, said member management method further comprising the step of:
when receiving an order from each user via the network, identifying a group, to which the user belongs, reading a benefit according to the identified group, and allocating the benefit to the user.
